**Europäisches Patentamt**

**European Patent Office**

**Office européen des brevets**

(19)

(11) Veröffentlichungsnummer: **0 466 107 A1**

## (12) EUROPÄISCHE PATENTANMELDUNG

(21) Anmeldenummer: **91111420.5**

(22) Anmeldetag: **09.07.91**

(51) Int. Cl.5: **F24J 2/34**, F24D 17/00

(30) Priorität: **10.07.90 DE 9010407 U**

(43) Veröffentlichungstag der Anmeldung:
**15.01.92 Patentblatt 92/03**

(84) Benannte Vertragsstaaten:
**BE DE DK ES FR IT NL**

(71) Anmelder: **Stefanakis, Jannis**
**Grillenweg 2**
**W-6500 Mainz(DE)**

(72) Erfinder: **Stefanakis, Jannis**
**Grillenweg 2**
**W-6500 Mainz(DE)**

(74) Vertreter: **Laufhütte, Dieter, Dipl.-Ing., Dr.-Ing.**
**Lorenz-Seidler-Gossel et al**
**Widenmayerstrasse 23**
**W-8000 München 22(DE)**

(54) **Sonnenkollektor.**

(57) Die Erfindung betrifft einen Sonnenkollektor in zumindest näherungsweiser Kalotten-, Halbkugel- oder Kugelform mit einem Speichertank (12) und einer diesen im Abstand umschließenden transparenten Haube (14). Zur Lösung der Aufgabe, den Aufbau eines derartigen Sonnenkollektors zu vereinfachen und dessen Funktionsweise noch effizienter zu gestalten, dient der Speichertank gleichzeitig unmittelbar als Absorber.

Fig. 1

EP 0 466 107 A1

Die Erfindung betrifft einen Sonnenkollektor in zumindest näherungsweiser Kalotten-, Halbkugel- oder Kugelform mit einem Speichertank und einer diesen im Abstand umschließenden transparenten Haube.

Derartige Sonnenkollektoren sind bereits aus der deutschen Patentanmeldung 31 01 186 des gleichen Anmelders bekannt. Sie weisen gegenüber den weitverbreiteten flachen Sonnenkollektoren den Vorteil auf, daß ihre Leistungsfähigkeit weniger stark von dem Einfallwinkel der Sonnenstrahlung abhängt und daß die Wärmeabsorptionsfläche größer ist als die Grundfläche des Sonnenkollektors. Weiterhin weisen die gattungsgemäßen Sonnenkollektoren den Vorteil auf, daß sie vollkommen unabhängig von der Aufstellrichtung und neutral gegenüber Ortsveränderungen bei Bewegungen sind. Allerdings weisen diese vorbekannten Sonnenkollektoren den Nachteil auf, daß sie verhältnismäßig kompliziert aufgebaut sind. So muß der Absorber, welcher aus einem oder mehreren gewickelten Rohren besteht, jeweils an die Form des Speichertanks, den diese Rohre umgeben, angepaßt werden.

Aufgabe der vorliegenden Erfindung ist es, den Aufbau des gattungsgemäßen Sonnenkollektors zu vereinfachen und dessen Funktionsweise noch effizienter zu gestalten.

Erfindungsgemäß wird diese Aufgabe dadurch gelöst, daß der Speichertank gleichzeitig unmittelbar als Absorber dient. Der Erfindung liegt die Erkenntnis zugrunde, daß die konvexe Wandung des Speichertanks als Absorptionsfläche für die durch die transparente Haube durchtretende Sonnenstrahlung ausreicht.

Bevorzugt besteht die Wandung des Speichertanks aus Aluminium oder Polyester. Diese Werkstoffe haben den Vorteil, daß sie vergleichsweise leicht sind, so daß das Gesamtgewicht des Kollektors gegenüber dem Stand der Technik, der ja zusätzlich noch Absorberrohrschlangen aufwies, beträchtlich gesenkt werden kann.

Die Haube kann als linsenförmige Plexiglaskuppel ausgeführt werden. Das bedeutet, daß am Scheitelpunkt der Haube die Wanddicke geringer gewählt ist als an den Haubenrändern. Hierdurch wird eine zusätzliche Konzentrierung der Sonnenstrahlung durch unterschiedliche Brechungswinkel erreicht.

Die Haube kann gem. einer bevorzugten Ausgestaltung der Erfindung doppelwandig ausgeführt sein.

Besonders vorteilhaft ist es, wenn der Sonnenkollektor zumindest näherungsweise kugelförmig geformt ist, wobei der untere Teil der Kugel in einem wärmeisolierten Gehäuse gelagert ist und der obere Teil von der Haube umgeben ist.

Gemäß einer bevorzugten Ausgestaltung kann innerhalb des Speichertanks zusätzlich ein Heizelement, vorzugsweise ein elektrischer Heizstab, angeordnet sein. Hierdurch ist es möglich, den Sonnenkollektor auch dann einzusetzen, wenn einerseits Wasser bei einer bestimmten Temperatur zur Verfügung gestellt werden soll und andererseits nicht genügend Strahlungsenergie zur Aufheizung des Wassers auf dieses Temperaturniveau vorhanden ist bzw. der Speicherinhalt schon zu stark abgekühlt ist. Dabei kann das Heizelement über eine Zeitschaltuhr aktivierbar sein, wobei vorteilhaft die Temperatur des im Speicher vorhandenen Wassers nach Erreichen einer vorbestimmten Zeit mittels des Heizelements dann aufgeheizt wird, wenn eine Solltemperatur unterschritten wurde.

Gemäß einer vorteilhaften Ausgestaltung des Sonnenkollektors kann ca. in der Symmetrieachse des Speichertanks ein Rohr verlaufen, dessen Querschnitt an einer Stelle mit einem Stopfen verschlossen ist. Das Rohr weist einen Zulaufstutzen und einen Ablaufstutzen für kaltes bzw. warmes Wasser auf. Im unteren wie auch im oberen Bereich des Speichertanks sind in dem Rohr Bohrungen angeordnet. Das Wasser läuft kalt durch den unteren Zulauf in das Rohr ein und wird durch den Stopfen an einem Aufsteigen nach oben gehindert. Es tritt demnach aus dem unteren Bereich des Speichertanks vorgesehenen Bohrungen aus. Aufgrund der Sonneneinstrahlung wird das Wasser warm. Das warme Wasser sammelt sich aufgrund des leichteren spezifischen Gewichts im oberen Bereich des Speichertanks. Dort tritt es durch die entsprechenden Bohrungen wiederum in das Rohr ein und läuft aus dem Ablaufstutzen oberhalb des Speichertanks ab.

Die vorbeschriebenen Sonnenkollektoren lassen sich als Einzelkollektoren problemlos in Reihe schalten. Dabei können diese beispielsweise in einem baumartigen Gebilde oder aber nebeneinander auf einem Flachdach angeordnet sein. Insbesondere bei Anordnung in einem Solarbaum können die Kollektoren in ansteigender Linie so miteinander verbunden werden, daß der Solarbaum als Schwerkraftkollektor betrieben werden kann.

Weitere Einzelheiten und Vorteile werden anhand der in der Zeichnung dargestellten Ausführungsbeispiele näher erläutert. Es zeigen:

Fig. 1: einen schematischen Querschnitt durch eine erste Ausführungsform des erfindungsgemäßen Sonnenkollektors;

Fig. 2: eine schematische Schnittdarstellung zweier weiterer alternativer Ausführungsformen des erfindungsgemäßen Sonnenkollektors;

Fig. 3: eine schematische Ansicht eines Sonnenkollektors bestehend aus Einzelkollektoren gem. dem Ausführungsbeispiel nach Fig. 1;

Fig. 4: einen schematischen Querschnitt durch einen Teil einer weiteren Ausführungsform des erfindungsgemäßen Sonnenkollektors und

Fig. 5: einen schematischen Querschnitt durch einen anderen Teil einer alternativen Ausführungsform des erfindungsgemäßen Sonnenkollektors.

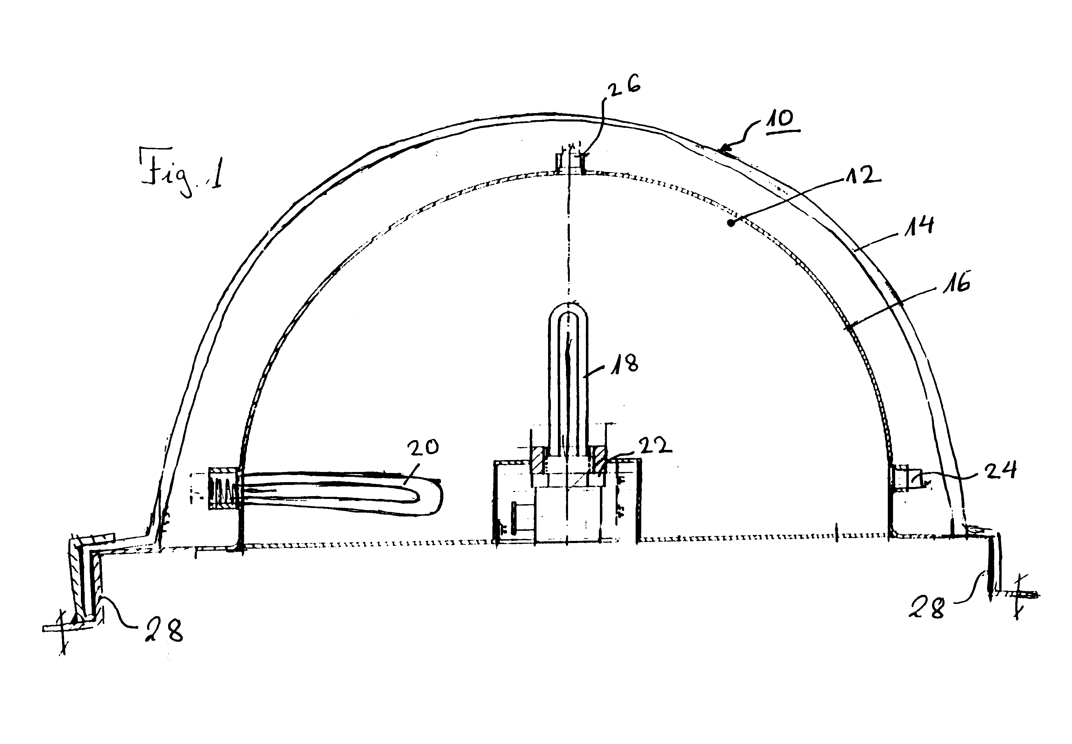

Der in Fig. 1 dargestellte Sonnenkollektor besteht aus einem halbkugelförmigen und zentral angeordneten Speichertank 12. Die Wandungen 16 dieses Speichertanks 12 bestehen aus Aluminium oder Polyester. Seitlich und nahe an der Bodenfläche weist der Speichertank einen Kaltwasserzulauf 24 auf. Der Warmwasserablauf 26 ist am Scheitelpunkt des Tanks angeordnet.

In einem vorbestimmten Abstand ist der Tank 12 von einer transparenten Haube 14 umgeben. Diese Haube 14 dient in üblicher Weise dazu, die auftreffende kurzwellige Sonnenstrahlung in den Kollektor eindringen zu lassen, wo sie bei Auftreffen auf die Absorptionsfläche, d.h. die Wandung 16 des Speichertanks 12, von dieser absorbiert und somit in Wärmeenergie umgewandelt wird. Die Wärmestrahlung des Speichers, die als solche ja langwellig ist, wird dagegen von der Haube 14 zurückgehalten, so daß die Haube zu dem als solchen bekannten Treibhauseffekt führt. Die einfallende Sonnenstrahlung kann dadurch noch zusätzlich konzentriert werden, daß die Haube 14 linsenförmige geformt ist, d.h. daß diese an ihrem Scheitelpunkt dünner, beispielsweise in einer Stärke von 1,5 mm, und an ihrer Umrandung entsprechend stärker, d.h. beispielsweise in einer Stärke von 5 mm, ausgeführt ist. Eine derartige Haube 14 kann beispielsweise aus Plexiglas gefertigt werden.

Innerhalb des Speichertanks kann ein elektrischer Heizstab 18 in einer Fassung bzw. Halterung 22 und/oder ein Heizstab 20 angeordnet sein. Mittels dieser zusätzlichen Heizelemente kann das im Speicher 12 befindliche Wasser auch dann auf eine bestimmte Solltemperatur gebracht werden, wenn die zur Verfügung stehende Sonnenenergie zum Aufheizen auf diese Temperatur nicht ausreicht, bzw. falls das im Speicher 12 befindliche Wasser schon zu stark abgekühlt ist. Der Heizstab 18 bzw. 20 kann auch mit einer Zeitschaltuhr verbunden sein, so daß dieser Temperaturausgleich nur zu einer vorbestimmten Zeit, beispielsweise am Morgen vor dem Duschen, erfolgt.

Aufgrund der einfachen Bauweise und der verhältnismäßig leichten Baumaterialien kann der Sonnenkollektor so leicht gebaut werden, daß er beispielsweise als transportables Gerät bzw. als Aufbaugerät für ein Campingmobildach etc. ausgeführt sein kann. Dabei kann der Kollektor einfach über einen Befestigungsflansch 28 montiert werden. Unterhalb der Bodenplatte des Speicherbehälters 12 kann eine nicht näher dargestellte Isolierplatte zur Verminderung der Wärmeverluste des Speichers 12 angeordnet werden (in Fig. 1 nicht dargestellt).

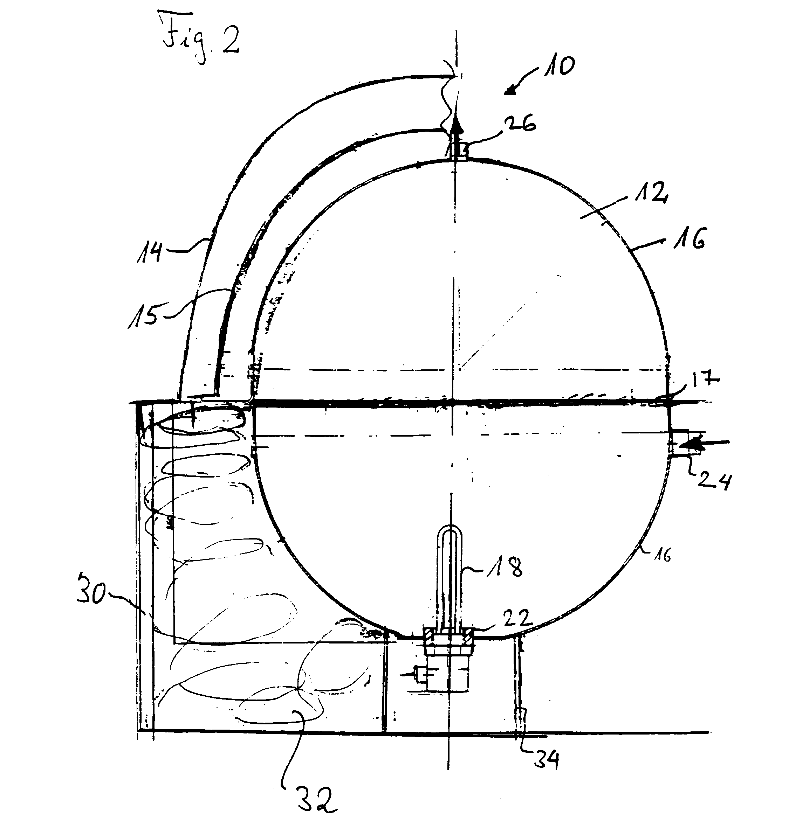

Der in Fig. 2 dargestellte Sonnenkollektor 10 weist eine näherungsweise kugelförmige Form auf. Der Speicher 12 ist aus zwei Halbkugeln, die entlang einer Schweißlinie 17 miteinander verschweißt sind, zusammengesetzt. In Fig. 2 sind zwei alternative Baueinheiten des Ganzkugelkollektors gezeigt. Auf der linken Seite ist die untere Hälfte des Speichertanks in einem eine Wärmeisolierung 32 aufweisenden Gehäuse 30 gelagert. Auf diesem Gehäuse 30 ist eine aus zwei Plexiglashalbschalen 14 und 15 bestehende doppelwandige Haube aufgesetzt. Bei der Ausführungsform gem. der rechten Seite der Fig. 2 ist der Sonnenkollektor 10 fast über seine gesamte Oberfläche von der doppelwandigen Haube 14, 15 (in der Fig. 2 nicht dargestellt) umgeben. Der Speicher 12 ist hier auf einem Podest 34 aufgelagert. Im abgeflachten Bodenbereich der unteren Speicherwandung 16 ist ein Heizelement 18 in einer Fassung 22 angeordnet. Der Zulauf für das Kaltwasser 24 ist im unteren Kugelbereich angeordnet, während der Warmwasserablauf 26 am Scheitelpunkt des Speichers 12 sitzt.

Die zuvor beschriebenen Sonnenkollektoren arbeiten als Schwerkraftkollektoren. Dies ermöglicht es, daß die zuvor beschriebenen Einzelkollektoren einfach zu einem größeren Kollektorgebilde zusammen in Reihe geschaltet werden können. Dabei können diese beispielsweise auf dem Flachdach eines Gebäudes angeordnet werden, wo sie zur Warmwasserbereitstellung dienen können. Mit den in Reihe geschalteten Speichertanks kann unmittelbar das Warmwassernetz des Gebäudes, beispielsweise eines Hotels, verbunden werden.

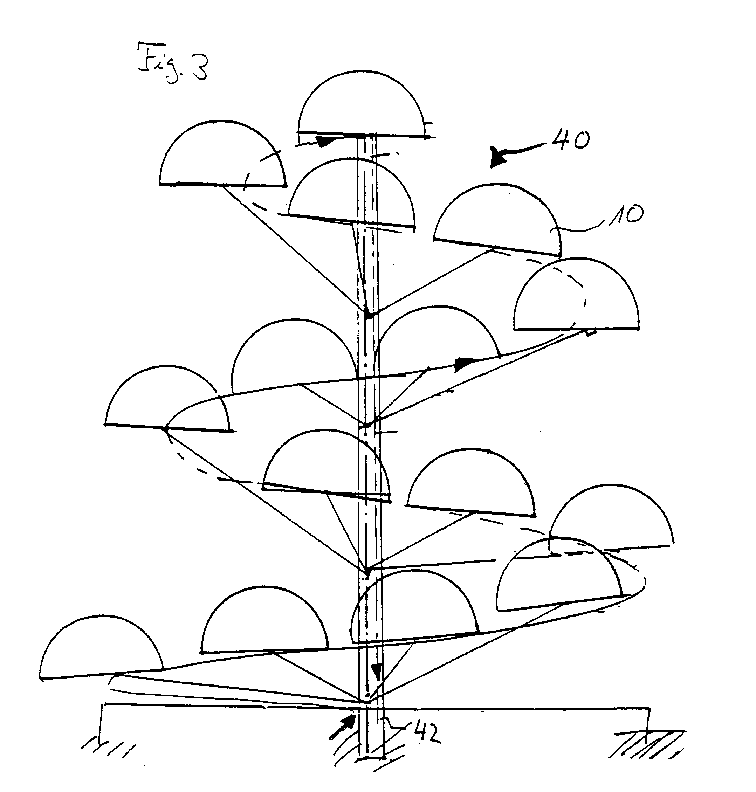

Alternativ dazu können die Einzelkollektoren auch in einem sogenannten Solarbaum, wie er in Fig. 3 dargestellt ist, angeordnet sein. Die Wasserführung erfolgt hier entlang der gestrichelten Pfeillinie. In der hier nur schematischen Darstellung sind die einzelnen Leitungsverbindungen zwischen den Einzelkollektoren 10 nicht dargestellt. Das vergleichsweise kalte Wasser tritt in den untersten Kollektor ein und steigt infolge der Erwärmung bis zum obersten Kollektor des Solarbaums auf. Dort wird vorzugsweise das aufgeheizte Wasser entnommen. Sich abkühlendes Wasser sinkt durch das Rohr 42 nach unten ab.

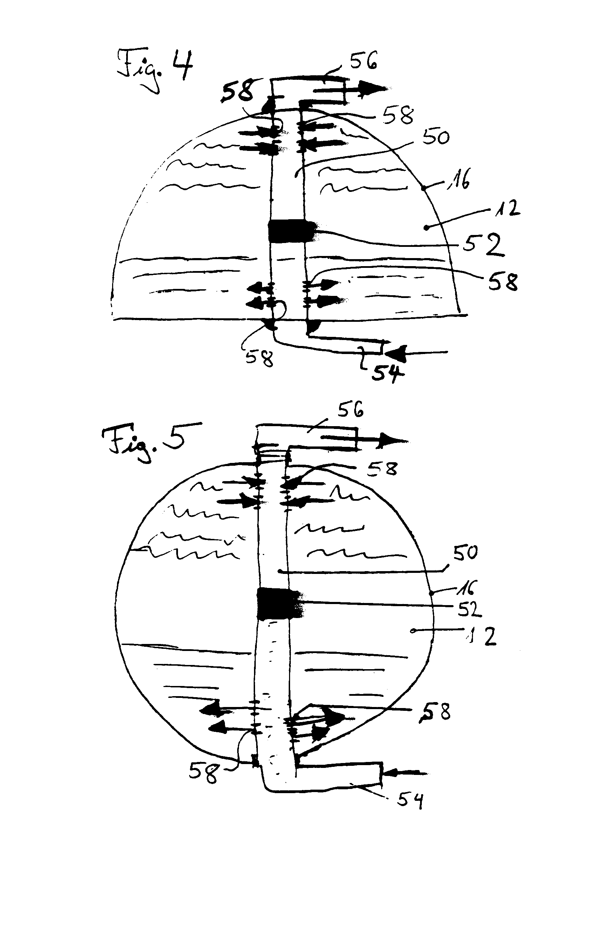

In den Figuren 4 und 5 sind Speichertanks 12 gemäß zweier alternativer weiterer Ausführungsformen der vorliegenden Erfindung dargestellt. Beide sind vom Prinzip her ähnlich aufgebaut, unterscheiden sich jedoch dadurch, daß der Speichertank gemäß Fig. 4 halbkugelförmig und der Speichertank gemäß Fig. 5 kugelförmig ausgebildet sind. In den jeweiligen Speichertanks 12 verlaufen zentrisch und vertikal Rohre 50, die ungefähr in der Mitte der Höhe des Speichertanks 12 mittels eines Stopfens 58, der beispielsweise eingeschweißt sein kann, verschlossen sind. Unterhalb des Speichertanks 12 ist an das Rohr 50 ein Zulauf für Kaltwasser 54 und oberhalb des Speichertanks ist an das Rohr 50 jeweils ein Ablaufrohr 56 für das erwärmte Wasser angeschlossen. Im Rohr 50 sind jeweils im unteren Bereich des Speichertanks 12 und im oberen Bereich des Speichertanks 12 Bohrungen 58 auf Umfang angeordnet. Wie den Figuren 4 und 5 zu entnehmen ist, tritt in den Zulaufstutzen 54 das kalte Wasser ein, das durch den Stopfen 52 an einem Aufsteigen im Rohr 50 gehindert wird und daher durch die Bohrungen 58 aus dem Rohr austritt. Das kalte Wasser wird aufgrund der Sonnenstrahlung erwärmt und steigt in den oberen Bereich des Speichers 12, wo es durch die entsprechenden Bohrungen 58 in das Rohr eintritt und über den Ablaufstutzen 56 nach außen geführt wird.

**Patentansprüche**

1. Sonnenkollektor in zumindest näherungsweiser Kalotten-, Halbkugel- oder Kugelform mit einem Speichertank (12) und einer diesen im Abstand umschließenden transparenten Haube (14)

   **dadurch gekennzeichnet,**

   daß der Speichertank (12) gleichzeitig unmittelbar als Absorber dient.

2. Sonnenkollektor nach Anspruch 1, dadurch gekennzeichnet, daß die Wandung (16) des Speichertanks (12) aus Aluminium oder Polyester besteht.

3. Sonnenkollektor nach Anspruch 1 oder Anspruch 2, dadurch gekennzeichnet, daß die Haube (14) als linsenförmige Plexiglaskuppel ausgeführt ist.

4. Sonnenkollektor nach einem der Ansprüche 1-3, dadurch gekennzeichnet, daß die transparente Haube (14) doppelwandig ausgeführt ist.

5. Sonnenkollektor nach einem der Ansprüche 1-4, dadurch gekennzeichnet, daß er zumindest näherungsweise kugelförmig geformt ist, wobei der untere Teil der Kugel in einem wärmeisolierten Gehäuse (30) gelagert ist und der obere Teil von der Haube (14) umgeben ist.

6. Sonnenkollektor nach einem der Ansprüche 1-5, dadurch gekennzeichnet, daß innerhalb des Speichertanks ein Heizelement, vorzugsweise ein elektrischer Heizstab (18,20) angeordnet ist.

7. Sonnenkollektor nach Anspruch 6, dadurch gekennzeichnet, daß das Heizelement (18,20) über eine Zeitschaltuhr aktivierbar ist, falls die Wassertemperatur unterhalb einer Solltemperatur absinkt.

8. Sonnenkollektor nach einem der Ansprüche 1-7, dadurch gekennzeichnet, daß ca. in der Symmetrieachse des Speichertanks (12) ein Rohr (50) verläuft, dessen Querschnitt an einer Stelle mit einem Stopfen (52) verschlossen ist, daß das Rohr (50) einen Zulaufstutzen (54) und einen Ablaufstutzen (56) aufweist und daß sowohl im unteren wie auch im oberen Bereich des Speichertanks (12) in dem Rohr (50) Bohrungen (58) angeordnet sind.

9. Sonnenkollektor bestehend aus mehreren Sonnenkollektoren nach einem der Ansprüche 1-8, dadurch gekennzeichnet, daß diese in Reihe geschaltet sind.

10. Sonnenkollektor nach Anspruch 9, dadurch gekennzeichnet, daß die in Reihe geschalteten Einzelkollektoren in Art eines Baumes (40) angeordnet sind.

11. Sonnenkollektor nach Anspruch 9, dadurch gekennzeichnet, daß die in Reihe geschalteten Einzelkollektoren (10) nebeneinander auf einem Flachdach eines Gebäudes angeordnet sind.

Fig.1

Fig. 2

EP 0 466 107 A1

6

Fig. 3

40

10

42

Fig. 4

Fig. 5

**Europäisches Patentamt**

# EUROPÄISCHER RECHERCHENBERICHT

Nummer der Anmeldung

## EP 91 11 1420

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y,A | WO-A-8 301 501 (SANDBERG)<br>* Seite 5, Zeile 1 - Seite 6, Zeile 11; Abbildungen 1,2 *<br>– – – | 1,3,2,4-7,<br>8 | F 24 J 2/34<br>F 24 D 17/00 |
| Y | US-A-4 557 251 (BURKHARDT)<br>* Spalte 2, Zeile 49 - Spalte 2, Zeile 63 * * Spalte 7, Zeile 30 - Spalte 7, Zeile 42; Abbildung 6 *<br>– – – | 2,4 | |
| Y | WO-A-8 501 790 (FRELLER)<br>* Seite 3, Zeile 20 - Seite 3, Zeile 26; Abbildung 1 *<br>– – – | 5 | |
| Y | FR-A-2 434 344 (LEROY ET AL)<br>* Seite 5, Zeile 6 - Seite 5, Zeile 20; Abbildung 2 *<br>– – – | 6,7 | |
| X | FR-A-2 367 993 (REMY)<br>* Seite 1, Zeile 26 - Seite 1, Zeile 36; Abbildung 1 *<br>– – – | 1 | |
| X,Y | FR-A-2 468 077 (BEAUGRAND ET AL)<br>* Seite 3, Zeile 20 - Seite 5, Zeile 37; Abbildung 1 *<br>– – – | 1,9,11,10 | |
| Y | US-A-4 325 358 (COMPARETTO)<br>* Abbildung 8A *<br>– – – | 10 | **RECHERCHIERTE SACHGEBIETE (Int. Cl.5)** |
| X | US-A-4 757 803 (DIXON)<br>* Spalte 2, Zeile 66 - Spalte 3, Zeile 13; Abbildung 1 *<br>– – – – – | 1 | F 24 J<br>F 24 D |

Der vorliegende Recherchenbericht wurde für alle Patentansprüche erstellt

| Recherchenort | Abschlußdatum der Recherche | Prüfer |
|---|---|---|
| Den Haag | 08 Oktober 91 | BELTZUNG F.C. |